# EUROPEAN PATENT APPLICATION

(11) **EP 2 663 037 A1**
(43) Date of publication of application: **13.11.2013**
(21) Application number: 12167141.6
(22) Date of filing: 08.05.2012
(51) Int. Cl.: H04L 12/70

(54) **Multi-level Bearer Profiling in Transport Networks**

(71) Applicant: Telefonaktiebolaget L M Ericsson (PUBL), 164 83 Stockholm (SE)
(72) Inventor: Rácz, Sándor, 2700 Cegléd (HU); Gerö, Bálazs Peter, 7633 Pécs (HU); Harmatos, János, H-1173 Budapest (HU); Nádas, Szilveszter, H-1192 Budapest (HU)
(74) Representative: Somervell, Thomas Richard

(57) **Abstract**

A method is provided for transporting data packets over a telecommunications transport network (312). The data packets are carried by a plurality of bearers (302, 304), the bearers each carrying data packets that relate to different ones of a plurality of services. In the method a multi-level bandwidth profiling scheme is applied to the data packets of each bearer (503-506). A series of information rates are assigned to a bearer (502), the profiling scheme identifying and marking (503, 504, 505) each data packet of the bearer according to the lowest of the information rates with which the packet is conformant. The marked data packets are forwarded for transport through the transport network (507). If there is insufficient bandwidth available in the transport network to transport all data packets (508, 510), data packets identified by the profiling and marked as only being conformant with a higher information rate are discarded (509, 511) before any data packets marked as being conformant with a lower information rate.

## Description

### Technical Field

The present invention relates to improvements in the handling of data communications transmitted across a transport network.

### Background

A transport network (TN) is used to carry data signals between a Radio Base Station (RBS), such as a NodeB or an eNodeB in 3G Long-Term Evolution (LTE) networks, and a Radio Access Network (RAN) entity such as a Radio Network Controller (RNC), Serving gateway (S-GW) or Packet Data Network gateway (PDN-GW). A TN may be operated by a mobile network operator or by a third party transport provider. In the latter case there would be a Service Level Agreement, SLA, between the mobile and transport operators. With the rapid growth of digital data telecommunications following the introduction of 3G and 4G technology, TNs may frequently act as bottlenecks in the overall data transport process. Thus, various systems and methods have been proposed for improving or prioritising the way that data packets are transported by the bearers.

Service differentiation in the RAN is one supplementary means for more efficiently handling high volumes of traffic. As a simple example, using service differentiation a higher bandwidth share can be provided for a premium service, and in this way the overall system performance can be improved. As another example, a heavy service such as p2p traffic, can be down-prioritized. Implementing such service differentiation methods requires integration into the Quality of Service (QoS) concept of LTE and Universal Mobile Telecommunications System (UMTS) technology. Details of the QoS concept for LTE can be found in the 3^{rd} Generation Project Partnership (3GPP) Technical Specification TS 23.410. The main idea of this concept is that services with different requirements use different bearers. When a User Equipment (UE) attaches to the network a default-bearer is established (typically a best-effort service). However, if the UE invokes services having different QoS parameters then a dedicated bearer is established for each service.

The Metro Ethernet Forum (MEF), in MEF 23, Carrier Ethernet Class of Service - Phase 1, set out a way of indicating which service frames (or data packets) are deemed to be within or outside of a Service Level Agreement (SLA) contract by assigning colours to the data packets according to the bandwidth profile. (See also http://metroethernetforum.org/PDF Documents/Bandwidth-Profiles-for-Ethernet-Services.pdf.) The colouring concept operates at the Class of Service (CoS) level. Identification of color can be used to indicate which service frames of a CoS are deemed to be within or outside of the contract according to the bandwidth profile. Levels of compliance are green when fully compliant, yellow when sufficient compliance for transmission but without performance objectives and red or discarded when not compliant with either. Note that there is no technical significance to the colour itself, which is just used as a convenient way of describing and/or labeling the data packets. The data packets of a bearer are checked against the compliance requirements by a bandwidth profiler, for example a two-rate, three-color marker.

This validation process can be used between two parties (e.g. between two operators) and can be the part of the SLA. In general, in the SLA different requirements are set for green packets and yellow packets. The green packets are "more important" than the yellow packets. To reflect this difference between the two types of packets, at a bottleneck point such as on entry to a TN, a colour aware active queue management discards yellow packets in preference to green packets when there is congestion (i.e. insufficient bandwidth available in the TN to transport all data packets).

IEEE 802.1ad introduced the Drop Eligibility (DEI) bit in Virtual Local Area Network (VLAN) tagged Ethernet frames. The DEI bit, which is mandatory in service VLAN tagged frames but optional for customer VLAN tagged frames, is one option to mark packets as green or yellow. Another option is to use the Differentiated Services Control Point (DSCP) field in the IP header.

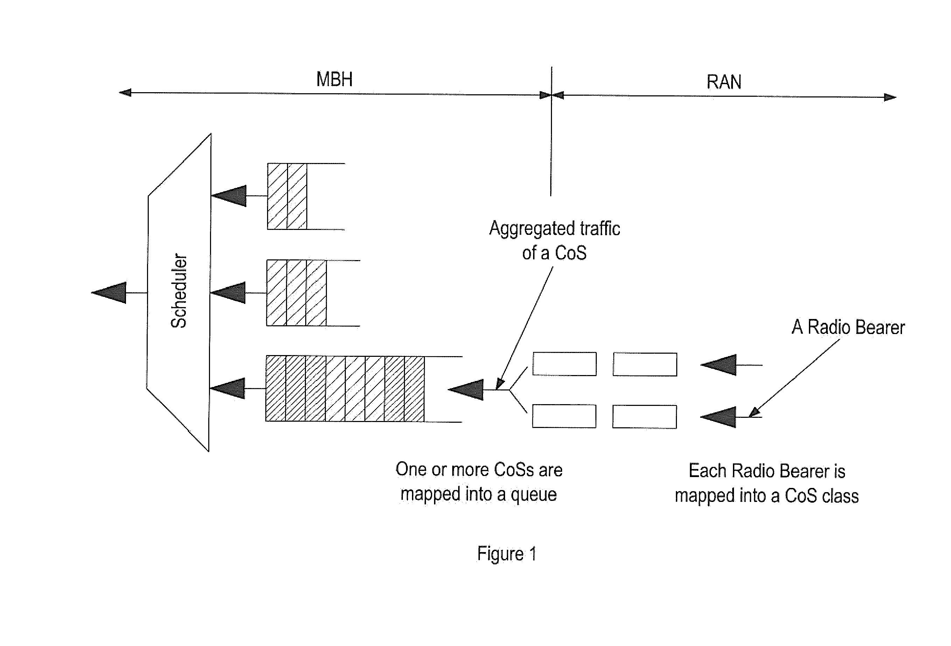

As indicated above, the colouring concept described by MEF operates at the Class of Service (CoS) level, not at the bearer level. Figure 1 illustrates the difference between the CoS level and the bearer level. In the RAN nodes (e.g. RNC) bearer level traffic handling is possible (i.e. data packets of one bearer can be treated independently of those of another bearer), whereas in the Mobile Backhaul (MBH) nodes of a TN, the CoS level handling is used (i.e. the data packets can only be differentiated by their CoS) and the MBH cannot differentiate traffic at the bearer level.

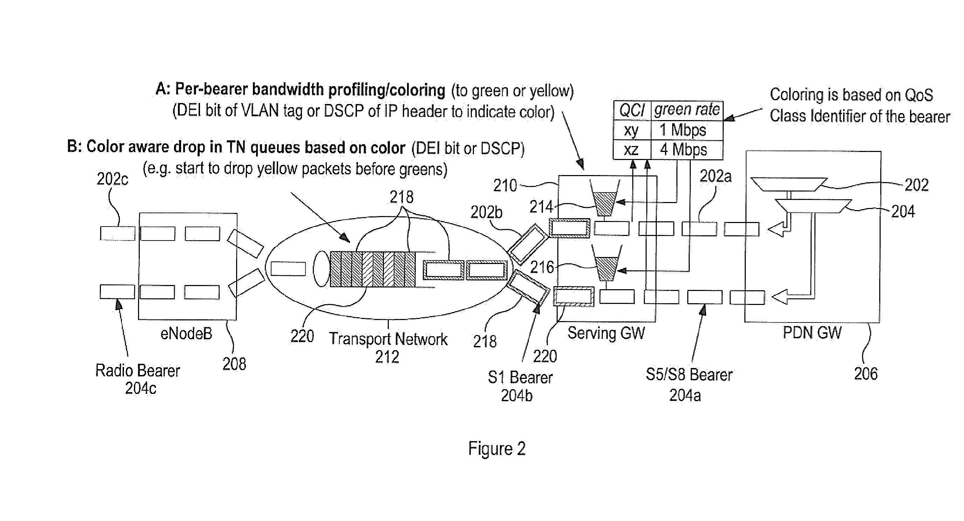

There is no common solution to provide efficient Radio Bearer (RB) level service differentiation over a Transport Network bottleneck. In International patent application No. PCT/EP2011/068023, the present inventors have described a mechanism for a per-bearer level service differentiation, that makes the bandwidth sharing among RBs more RAN-controlled. This is described further below in relation to Figure 2. The mechanism employs a similar concept of "colour" profiling at the bearer level. Thus, for each RB a predefined profiling rate (i.e. green rate) is assigned based on the Quality QoS Class Identifier (QCI) of the RB. This mechanism allows bandwidth guarantees to be provided for the RBs, at least to a certain degree.

An alternative way to differentiate between bearers having different priorities is to use different DSCP drop precedence parameters, together with different Random Early Discard (RED) parameters, for different bearer DSCP levels. However this method, which is built on Transmission Control Protocol (TCP) congestion control, cannot provide throughput guarantees or resource sharing in a general case (e.g. in the case of a different number of TCP flows per user or different TCP versions).

Referring to Figure 2, this shows a schematic illustration of a TN employing bandwidth profiling for each of two bearers. The example is shown of an LTE system with two bearers 202, 204 each carrying data packets between a PDN-GW 206 and an eNodeB 208 via a S-GW 210 and through a TN 212. The Bearers 202, 204 are designated S5/S8 bearers 202a, 204a between the PDN-GW 206 and the S-GW 210, S1 bearers 202b, 204b from the S-GW 210 over the TN 212, and radio bearers 202c, 204c beyond the eNodeB 208. Each Bearer is assigned a bandwidth profiler- profiler 214 for bearer 202 and profiler 216 for bearer 204. Each of the bearers has an assigned QCI and an associated predefined Committed Information rate (CIR) or 'green' rate (CIR) and profiler queue size. Packets of each Bearer 102, 104 that conform with the bearer's profiler 114, 116 are marked as conformant packets 118 (i.e. assigned 'green') and packets that do not conform are marked as non-conformant packets 120 (i.e. assigned 'yellow'). All data packets that are not coloured 'green' by the profilers 114, 116 are assigned 'yellow'. For example, assume that the 'green rate' is 5 Mbps for a Bearer and the bitrate of this Bearer is about 7.5 Mbps. In this case, approximately 1/3 of the packets of the Bearer will be assigned to 'yellow'.

The TN 112 bottleneck active queue management can then use the colour information marked in the data packets when choosing which packets to drop when there is insufficient bandwidth (congestion). The first packets to be dropped will be the 'yellow' packets 120.

In the example described, a two-colour (green-yellow) profiler is used for each Bearer. When the profiler 114, 116 assigns a Packet either 'green' or 'yellow', this means that the packet is marked with the conformance information in such a way it can be used at the TN bottleneck buffer(s). For example the Drop Eligibility (DEI) bit of the packet's Ethernet frame, or the Differentiated Services Control Point (DSCP) field in the IP header could be used to indicate if a packet has been assigned 'green' or 'yellow'.

This colouring concept can also be used for improving per-service or per-bearer fairness at a bottleneck, as described in PCT/EP2011/068023. In this case, the colouring concept is used in a different way, for a different purpose and at a different location (i.e. it is done in the RAN node instead of in the Mobile Backhaul, MBH, node). A green rate is assigned for a bearer (i.e. for a service of a user and roughly speaking a desired bitrate for that service) and data packets of the bearer that do not exceed this bitrate are coloured green, whereas data packets above the green rate are coloured yellow. In this case when a bearer has yellow packets that means that it has a higher bandwidth than the desired value (but gains from this higher bandwidth when the data packets are transported through the bottleneck), so the drop of these yellow packets probably does not have a serious negative impact on the service performance.

In the mechanism of Figure 2 described above a static profiling method is used that allows the RAN more control over the bandwidth sharing among RBs. A predefined profiling rate (i.e. green rate) is assigned to a bearer based on the QCI of the RB, and a colour aware dropping of data packets is used at the TN. In this way, to a limited extent, bandwidth guarantees can be provided for the bearers and without the need for any information about the number of ongoing bearers or bottleneck capacity changes.

This static green rate setting can be used for a bearer (i.e. service) where the bandwidth requirement is known in advance - for example a streaming service. However, a relative service differentiation can be useful. For example to differentiate between a premium and a normal Internet access, then a premium user may get, say, 4 times more bandwidth than a normal user. In a High-Speed Downlink Packet Access (HSDPA) network this type of service differentiation is referred to as a Relative Bitrate (RBR) feature. As an option the static green rate setting can be used to approximate relative service differentiation. The static profiling rates for the bearers can be determined based on the typical TN link capacity and the typical traffic mix.

However, the use of static green rates cannot provide relative service differentiation in all situations. In particular, a static profiling rate mechanism cannot handle all traffic mixes, or where there are substantial changes in the traffic mix, in per-bearer resource sharing. This means that the existing mechanisms do not provide very efficient relative service differentiation. In addition, use of a static green rate setting can not deal with resource sharing among different Radio Access Technologies (RATs - e.g. HS & LTE). This means that it can not deal with resource sharing among MBH services in controlled way. Also, with the use of a static green rate, any available capacity (green rate) that is assigned to a bearer but is not being utilized by that bearer can not be reassigned for use by other bearers.

### Summary

A first aspect provides a method of transporting data packets over a telecommunications transport network. The data packets are carried by a plurality of bearers, the bearers each carrying data packets that relate to different ones of a plurality of services. In the method a multi-level bandwidth profiling scheme is applied to the data packets of each bearer. A series of information rates are assigned to a bearer, the profiling scheme identifying and marking each data packet of the bearer according to the lowest of the information rates with which the packet is conformant. The marked data packets are forwarded for transport through the transport network. If there is insufficient bandwidth available in the transport network to transport all data packets, data packets identified by the profiling and marked as only being conformant with a higher information rate are discarded before any data packets marked as being conformant with a lower information rate.

Embodiments provide a mechanism that extends the profiling (i.e. colouring) concept with the use of more colours to provide better control of resource sharing among bearers. By using more colours resource sharing among bearers can be controlled more precisely and allows handling of TN bottleneck capacity changes (e.g. using Adaptive Modulation) and resource sharing for more traffic mixes. The improved efficiency of service differentiation by using more colours in the profiling is achieved without any additional algorithmic or architectural complexity. The mechanism only requires the profiler and the TN colour aware dropping to support use of more colours.

Embodiments include determining the different bearer colouring rates based on different bandwidth requirement levels for each service. As an example, for a premium subscriber the profiling levels can be set to 10 Mbps, 5 Mbps and 1 Mbps respectively, representing a target bitrate in a low system load, medium load and high load scenarios.

### Brief Description of the Drawings

Figure 1 is a schematic illustration showing transport of data packets of bearers over a Transport Network (TN).
Figure 2 is a schematic illustration of a TN employing a known per-bearer bandwidth profiling mechanism.
Figure 3 is a schematic illustration of a TN employing a multi-level per-bearer bandwidth profiling mechanism.
Figure 4 illustrates the results of simulations of a TN employing a multi-level per-bearer bandwidth profiling mechanism
Figure 5 is a flow diagram illustrating the principal steps in a method of multi-level per-bearer bandwidth profiling.
Figure 6 is a block diagram illustrating functional components in a network entity configured for use with a multi-level per-bearer bandwidth profiling mechanism.

### Detailed Description of Preferred Embodiments

The embodiments described herein apply per-Bearer bandwidth profiling to control resource sharing among Bearers carrying different services. The embodiments employ a 'colour' profiling scheme of the type described above.

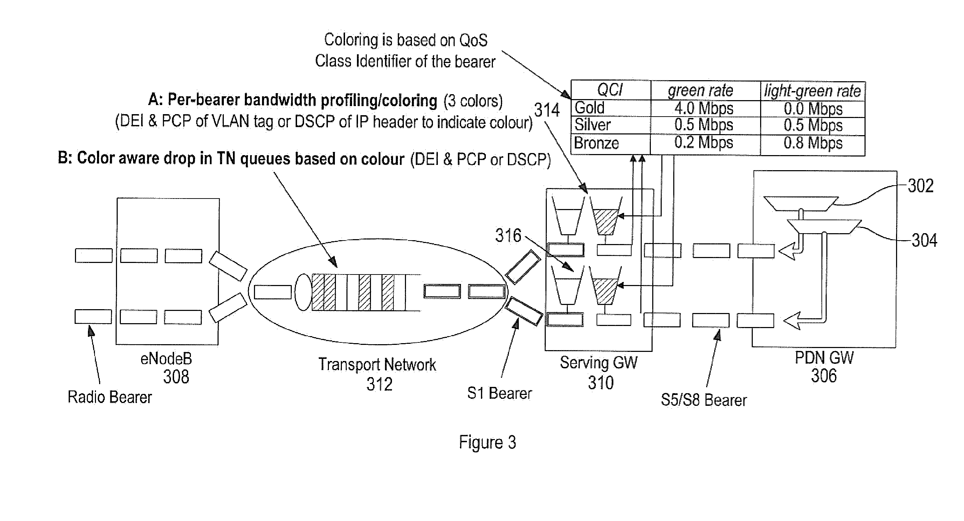

Referring to Figure 3, this shows a schematic illustration of a TN employing bandwidth profiling for each of two bearers, similar to Figure 2 described above. The example is shown of an LTE system with two bearers 302, 304 each carrying data packets between a PDN-GW 306 and an eNodeB 308 via a S-GW 310 and through a TN 312. As in Figure 2, each Bearer is assigned a bandwidth profiler - profiler 314 for bearer 302 and profiler 316 for bearer 304. Each of the bearers has an assigned QCI, which will be discussed further below, and is used in determination of a Committed Information rate (CIR) or green rate and of an Excess Information Rate (EIR) or 'light green' rate for each bearer.

The profilers 314, 316, are each multi-level profilers. In the example shown three colours are used in each profiler - green, light green, and yellow. Packets of each Bearer 302, 304 that conform with the green rate at the bearer's profiler 314, 316 are marked as conformant packets 318 (i.e. assigned 'green'). Packets of each bearer that do not conform with the green rate (CIR), but do conform with the light green rate (EIR) are marked as light green packets 319. Packets that do not conform with the green or light green rates are marked as non-conformant or yellow packets 320. This example is of a two-rate, three-colour profiler, which means that all data packets that are not assigned 'green' or 'light green' by the profilers 314, 316 are assigned 'yellow'. It will be appreciated that the principles described may readily be extended to include more than three colours, in which case an additional EIR needs to be specified (or determined) for each additional colour and for each bearer.

The TN 312 bottleneck active queue management can then use the colour information marked in the data packets when choosing which packets to drop when there is insufficient bandwidth (congestion). The first packets to be dropped will be the 'yellow' packets 320. If there are no yellow packets (either because these have already been dropped, or because no packets have been coloured yellow by the profilers), then the next packets to be dropped will be the light green packets.

Note that in PCT/EP2011/068023, the mechanism described by the present inventors optionally includes use of an EIR or yellow rate, wherein the profiler immediately discards data packets that do not comply with the EIR. The TN bottleneck active queue management (AQM) thus only receives green or yellow packets.

The rates - CIR and one or more EIRs - of the colours may be determined based on the desired sharing among bearers. The use of more colours allows better optimization of resource sharing at more bottleneck capacity levels and/or traffic load mixes. Bearers having different characteristics (e.g. different bitrate requirements) have different QCI values. This bearer classification is done at the bearer setup. The profiling rates of a bearer are then determined based on the QCI value. Thus, the QCI of the bearer is an input to the mechanism. For example, as shown in Figure 3, the QCI values may reflect services prioritized by operators assigning each user a gold, silver or bronze priority level. The green rate (CIR) and light green rate (EIR) of each QCI category of user is indicated in the figure. (Note that the light green rates shown in Figure 3 are the amounts in Mbps above the green rate setting - thus the Gold user's light green rate is show as 0.0 MBps, meaning that the actual total EIR is 4.0 Mbps, or the same as the green rate).

The set rates may be load/capacity dependent profiling rates set for each bearer. This provides better open loop control of the per bearer resource sharing. For example, as shown in Figure 3, the gold user (using a gold bearer) is guaranteed 4 Mbps, but silver and bronze users are only guaranteed 1Mbps in a low load condition, and only 0.5 Mbps for the silver users and 0.2 Mbps for the bronze users at medium load. In this way we protect the gold user and the bronze user is down-prioritized compared to the silver user in higher load - i.e. the light green rate reflects the low load condition with both silver and bronze users having a target bandwidth of1 Mbps, but the higher load condition is reflected by the green rates, the silver user being allocated 0.5 Mbps while the bronze user is only allocated 0.2 Mbps.

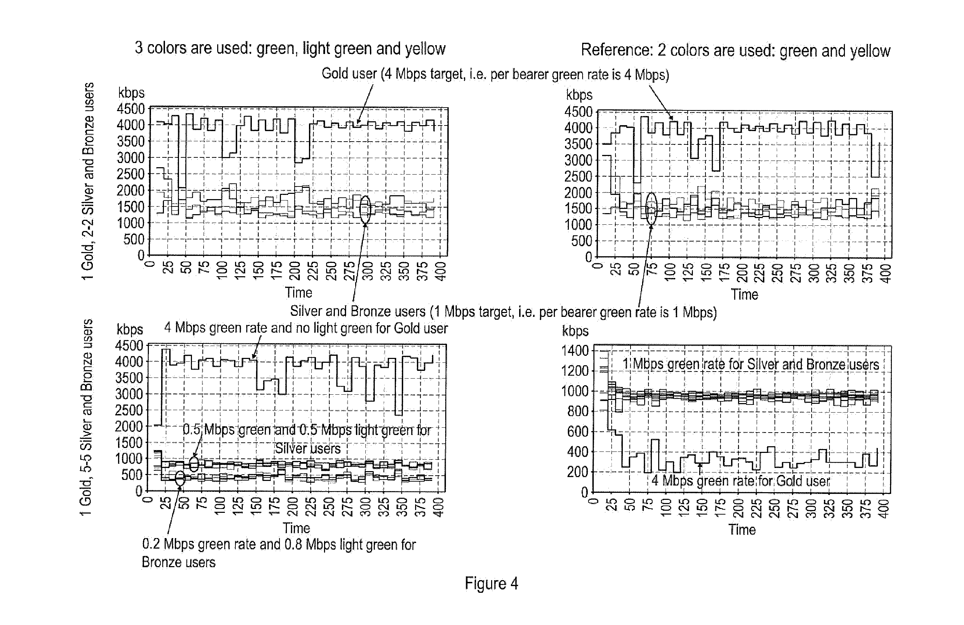

Figure 4 shows simulation results using the rates of the example above for gold, silver and bronze users. The graphs on the left hand side illustrate the effect of using a 3-colour profiler, and for comparison, the graphs on the right illustrate normal profiling with 2 colours, in which the green rates of the silver and bronze users were the same as the light green rates shown in Figure 3. The top graphs are for a situation where there is one gold user, two silver users and two bronze users. The TN bottleneck capacity is 10Mbps, and so in this case there is no congestion and the two graphs (top left and top right) show little change, the gold user being able to use the full 4 Mbps and the silver and bronze users each able to use their 1 Mbps. The bottom two graphs illustrate the effect of the different profiling mechanisms when there is congestion due to there being 5 silver users and 5 bronze users. As can be seen, the effect of the 3-colour profiling is that the gold user continues to be able to use the full 4 Mbps most of the time, while the silver and bronze users are restricted to much lower bandwidths by their low green rates. However, in the 2-colour mechanism, the large number of silver and bronze users having 1 Mbps green rates have a sever impact on the gold user.

In the reference case (with 2 colours) the profiling rate is optimized for a traffic mix of one gold, two silver and one bronze users. However, with the additional colour the profiling can be optimized for two working points or traffic mixes. One is the same as above (1 gold, 2 silver, 2 bronze) and the other for a traffic mix with higher load (1 gold, 5 silver, 5 bronze). Figure 4 illustrates that the multi-level profiling provides better resource sharing for both traffic mixes.

An explanation of this effect is that the bearer level profiling works optimally when the sum of the green rates of the ongoing bearers is about equal to, or a little less than, the bottleneck capacity. When predefined profiling rates are used for the bearers, then the sum of the green rates depends on the actual traffic mix. In the above example, in the 1-2-2 traffic mix the sum of the green rates in the 2-colour profiler and the sum of the EIRs (the total green + light green rates) in the 3-colour profiler was 8 Mbps. In this case there was no need to drop any green packets because the bottleneck capacity was 10 Mbps. But for the other traffic mix, in the 2-colour profiler the total rate was 14 Mbps, therefore almost all packets were coloured green (and there almost none yellow). Therefore green packets were dropped and the advantage of per bearer colour profiling was lost. However, by using more colour levels, then packet differentiation can be applied for more capacity/load situations. In this example, in the 3-colour profiler, the sum of the green rates was only 7.5 Mbps. In the high load traffic mix there was no dropping of green packets, but some dropping of light green packets. In this way, for example, the gold user was protected because it had only green packets.

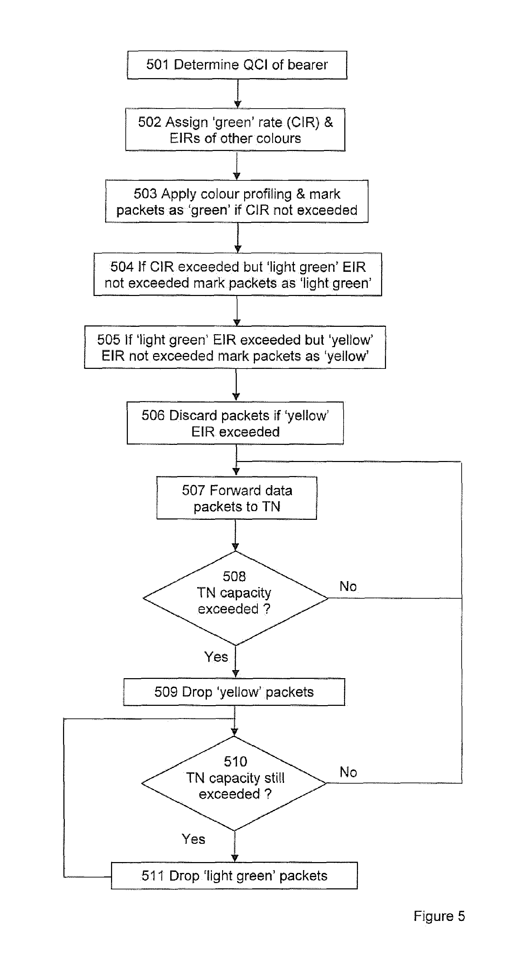

Figure 5 is a flow diagram illustrating the principal steps in a method of implementing the multi-level profiling mechanisms described above. The diagram illustrates the use of 3 colours although it will be appreciated that it can easily be extended to include more colours. At step 501 an initial determination is made of the type of a bearer (QCI value) , and at step 502, the green rate (CIR) and the EIRs applicable to the other colours used at the profiler (light green and yellow) are assigned to the bearer. At step 503 the profiler applies colour profiling to the data packets of the bearer, and marks the data packets as green if the CIR is not exceeded. At step 504, if the CIR is exceeded, but not the light green EIR then data packets are coloured 'light green'. At step 505, if the light green EIR is exceeded, but not the yellow EIR, then data packets are coloured 'yellow'. At step 506 if the yellow EIR is exceeded, then the data packets are discarded.

At step 507 the data packets are forwarded to the TN. Before being sent over the TN, at step 508, it is determined if there is congestion in the TN -i.e. if the TN capacity is being exceeded. If not, then the method loops back to step 507. If there is congestion, then at step 509 'yellow' data packets are dropped. At step 510 a further determination is made as to whether the capacity of the TN is still being exceeded. If not, then the method returns to step 507. If at step 510 there is still congestion (capacity of TN is still being exceeded) then at step 511 data packets of the colour corresponding to the next highest information rate are dropped (e.g. light green in this 3-colour example), and the method loops back to step 510. Only if after looping back to step 510 after all colours of data packets other than green have been dropped will the method proceed to drop green packets at step 509.

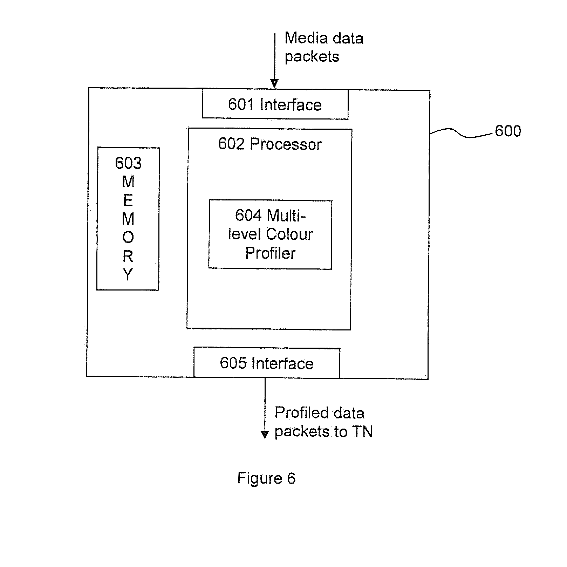

Figure 6 is a block diagram showing the principal functional components of a RAN entity (node) 600 applying the multi-level profiling mechanisms described above. The entity includes an interface 601 through which media data packets of one or more bearers arrive, which are destined to be transported over a TN, and another interface 605 through which media data packets are forwarded on to the TN. The network entity 600 also includes a processor 602 and a memory 603 storing data and programming instructions for the processor. The processor 602 includes a multi-level bandwidth profiler 604 that applies colour profiling to the data packets of each of the bearers. A series of information rates are assigned to each bearer and stored in memory 603. The profiler 604 identifies and marks each data packet of the bearer according to the lowest of the information rates with which the packet is conformant, or if the data packet is not conformant with any of the information rates. The marked data packets are forwarded via interface 605 for transport through the transport network.

The mechanisms and embodiments described above provide a more efficient per-bearer level service differentiation without requiring additional algorithmic and/or architectural complexity at the TN (MBH edge). The mechanisms also allow for control of resource sharing to cover several different traffic mixes and/or in several capacity levels in the TN. Using more colours improves the operation of the TN bottleneck and provides better control of resource sharing among bearers. With more colours resource sharing can be controlled more precisely, for example by adjusting for bottleneck capacity changes and in providing controlled resource sharing for more traffic mixes.

## Claims

1. A method of transporting data packets over a telecommunications transport network (312), wherein the data packets are carried by a plurality of bearers (302, 304), the bearers each carrying data packets that relate to different ones of a plurality of services, the method comprising:
applying (503-506) a multi-level bandwidth profiling scheme to the data packets of each bearer, wherein a series of information rates are assigned (502) to a bearer, the profiling scheme identifying and marking (503, 504, 505) each data packet of the bearer according to the lowest of the information rates with which the packet is conformant; and
forwarding (507) the marked data packets for transport through the transport network, wherein if there is insufficient bandwidth available in the transport network to transport all data packets (508, 510), data packets identified by the profiling and marked as only being conformant with a higher information rate are discarded (509, 511) before any data packets marked as being conformant with a lower information rate.

2. The method of claim 1 wherein the series of information rates assigned to a bearer include a committed information rate, CIR, and one or more progressively higher excess information rates, EIRs.

3. The method of claim 2, wherein the CIR and each of said EIRs of the bearer are determined based on a QoS class identifier, QCI, of the bearer.

4. The method of claim 2 or claim 3, wherein the bandwidth profiling includes assigning and marking the data packets of a bearer that are conformant with the CIR as 'green' data packets, and assigning and marking other data packets as other colours corresponding to the EIR with which the packet is conformant.

5. The method of claim 4, wherein applying the bandwidth profiling further comprises adding an indication of the packet 'colour' to a data field in the packet.

6. The method of claim 5 wherein the indication of the packet 'colour' comprises a Drop Eligibility, DEI, bit and/or a Differentiated Services Control Point, DSCP field in an IP header of the packet.

7. The method of any preceding claim wherein the information rates are assigned to each of the bearers (302, 304) based on a resource sharing scheme among all of the bearers.

8. The method of claim 7, wherein the resource sharing scheme includes assigning a priority level to each of the bearers (302, 304), and wherein the information rates for each bearer are determined based on the priority level of the bearer.

9. The method of claim 8, wherein each of the series of information rates assigned to a bearer having the highest priority level is the same information rate.

10. The method of any preceding claim wherein the sum of the lowest information rates assigned to all of the bearers is approximately equal to the capacity of the transport network (312).

11. A network entity (306, 310) of a telecommunications network that provides data packets for transport through a transport network (312), wherein the data packets are carried by a plurality of bearers (302, 304), the bearers each carrying data packets that relate to different ones of a plurality of services, the network entity comprising a multi-level bandwidth profiler (314, 316) applying a bandwidth profiling scheme to the data packets of each of the bearers, wherein a series of information rates are assigned to a bearer, the profiling scheme identifying and marking each data packet of the bearer according to the lowest of the information rates with which the packet is conformant; and to forward the marked data packets for transport through the transport network.

12. The network entity of any of claim 9, wherein the network entity is a Serving Gateway, S-GW (310), or a Packet Data Network Gateway, PDN-GW (306) in a LTE network.

13. The network entity of claim 9, wherein the network entity is a Radio Network Controller, RNC, or a Gateway GPRS Support Node, GGSN, in a High-Speed Downlink Packet Access, HSDPA, network.
